# EUROPÄISCHE PATENTSCHRIFT

(11) **EP 0 472 059 B1**
(45) Veröffentlichungstag und Bekanntmachung des Hinweises auf die Patenterteilung: **29.06.1994**
(21) Anmeldenummer: 91113354.4
(22) Anmeldetag: 08.08.1991
(51) Int. Cl.: E05B 73/00, G06F 1/16

(54) **Kommunikationsendgerät mit Flachdisplay**
Communication terminal with a flat panel display
Terminal de communication avec un afficheur à écran plat

(30) Priorität: 24.08.1990 DE 9012219 U; 24.08.1990 DE 9012218 U
(43) Veröffentlichungstag der Anmeldung: 26.02.1992
(73) Patentinhaber: Siemens Nixdorf Informationssysteme Aktiengesellschaft, 33102 Paderborn (DE)
(72) Erfinder: Köhler, Friedrich, W-8851 Westendorf (DE)
(74) Vertreter: Fuchs, Franz-Josef, Dr.-Ing.

(56) Entgegenhaltungen:
- EP-A- 0 058 242
- EP-A- 0 111 645
- US-A- 4 624 434
- US-A- 4 814 759

## Beschreibung

Die Erfindung betrifft ein Kommunikationsendgerät mit Flachdisplay, bestehend aus einem flach ausgeformten Flachdisplaygehäuse, das auf einem ebenso flach ausgeformten Standfuß auf einer parallel zur Frontseite verlaufenden Achse schwenkbar gelagert ist.

Aus Platz- und Mobilitätsgründen besteht das Bestreben, bei Computermonitoren, Monitoren von Bildschirmgeräten und Fernsehgeräten die Elektronenstrahlröhre durch ein LCD-Display zu ersetzen. Beispielsweise werden als Laptop bezeichnete mobile Computer üblicherweise mit einem LCD-Display ausgestattet. Dieses LCD-Display befindet sich im Deckel des Computergehäuses, der im geschlossenen Zustand sowohl die Tastatur als auch das LCD-Display schützt. Der Deckel ist über Gelenke fest mit dem Computergehäuse verbunden. Das LCD-Display ist also vollständig in das Computergehäuse integriert.

Für den Fall, daß eine solche Integration nicht gewünscht ist, sondern das LCD-Display als separates Kommunikationsendgerät in einem entsprechenden Gehäuse betrieben werden soll, muß das LCD-Display ebenso wie beim Laptop-Computer im Betrieb sicher aufstellbar sein und beim Transport handlich und geschützt sein.

Aus EP 0 058 242 A1 ist eine Halterung für ein Flachdisplay eines Datensichtgerätes bekannt. Das Flachdisplay ist über einen Schenkarm in einem Fußteil befestigt. Sowohl das Flachdisplay, als auch das Fußteil sind mit dem Schwenkarm in einer parallel zur Frontseite verlaufenden Achse schwenkbar verbunden. Die Beweglichkeit der Gelenke ist dabei so ausgelegt, daß der Flachbildschirm mit seiner Rückseite auf das Fußteil gelegt werden kann. In diesem zusammengeklappten Zustand weist die Oberfläche des Flachdisplays nach außen und ist damit ungeschützt.

Die der Erfindung zugrundeliegende Aufgabe ist es deshalb, einen Standfuß für das Flachdisplaygehäuse so zu gestalten, daß ein sicheres Aufstellen bei Wahrung der Schwenkbarkeit, des Flachdisplaygehäuses und ein geschützter Transport, bei möglichst geringen Außenmaßen der aus Flachdisplaygehäuse und Standfuß bestehenden Gesamteinheit, des Displays gewährleistet ist.

Diese Aufgabe wird erfindungsgemäß durch die im Anspruch 1 angegebenen Merkmale gelöst.

Der zweigeteilte Fuß erfüllt durch seine Verschwenkbarkeit in zwei Endpositionen sowohl die Forderung nach dem sicheren Stand des Flachdisplaygehäuses als auch die Forderung nach einem Schutz des LCD-Displays beim Transport des Flachdisplaygehäuses.

Besondere Ausgestaltungen und Weiterbildungen können den Unteransprüchen entnommen werden. Im folgenden wird die Erfindung anhand der Zeichnung näher erläutert. Dabei zeigen
FIG 1 ein erfindungsgemäßes Kommunikationsendgerät mit Flachdisplaygehäuselager im Flachdisplaygehäuse
FIG 2 ein zusammengeklapptes Kommunikationsendgerät nach FIG 1
FIG 3 ein Kommunikationsendgerät mit Flachdisplaygehäuselager im ersten Standfußteil
FIG 4 ein zusammengeklapptes Kommunikationsendgerät nach FIG 3.
FIG 5 ein Lager mit integrierter Reibungsbremse

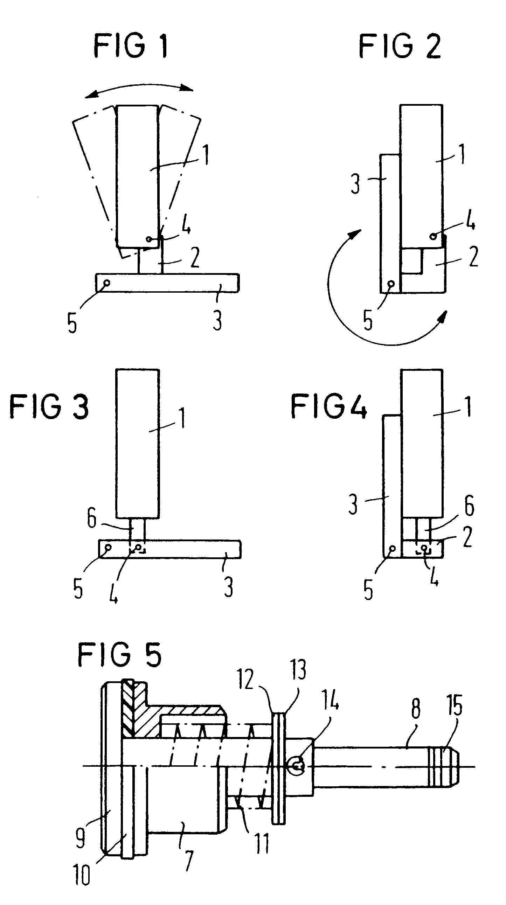

Die FIG 1 bzw. die FIG 2 zeigt ein Kommunikationsendgerät mit Flachdisplay in Seitenansicht. Ein Flachdisplaygehäuse 1 ist über ein Flachdisplaygehäuselager 4 schwenkbar mit einem ersten Standfußteil 2 verbunden. Zwei mögliche Schwenkpositionen des Flachdisplaygehäuses 1 sind durch gestrichelte Linien angegeben. Es sind aber mehrere solcher Schwenkpositionen möglich. Die Anzahl der Schwenkpositionen hängt von der Art des Flachdisplaygehäuselagers 4 ab. Prinzipiell ist stufenweise Verstellbarkeit oder stufenlose Verstellbarkeit möglich. Die jeweilige Schwenkposition kann durch Feststellschrauben oder ohne zusätzliche manuelle Tätigkeit, beispielsweise durch eine Reibungsbremse gemäß FIG 5 fixiert werden.

Das erste Standfußteil 2 ist winkelig ausgeführt und enthält in einem ersten Schenkel das Flachdisplaygehäuselager 4. Ein zweiter Schenkel des ersten Standfußteils 2 enthält ein Standfußlager 5. Über dieses Standfußlager 5 ist das erste Standfußteil 2 mit einem zweiten Standfußteil 3 verbunden. Das erste Standfußteil 2 und das zweite Standfußteil 3 sind gegeneinander um 270° verschwenkbar. Aus der ersten Endposition, in der die beiden Standfußteile 2, 3 eine gemeinsame Ebene - die Standfläche des Standfußes - bilden, kann das zweite Standfußteil 3 auf die Frontseite des Flachdisplaygehäuses 1 geklappt werden. In dieser zweiten Endposition wird das zweite Standfußteil 3 als Deckel zum Schutz des LCD-Displays genutzt. Das zweite Standfußteil bedeckt dazu die gesamte Oberfläche des LCD-Displays.

Die beiden Endpositionen können durch Klemmeinrichtungen oder durch Einrastvorrichtungen - wie beim Flachdisplaygehäuselager 4 - im Standfußlager 5 fixiert werden.

In FIG 3 bzw. in FIG 4 ist ebenso wie in FIG 1 ein Kommunikationsendgerät in Seitenansicht dargestellt. In dieser Version befindet sich das Flachdisplaygehäuselager 4 direkt im ersten Standfußteil 2. An der zum Standfuß 2, 3 gewandten Außenseite des Flachdisplaygehäuses 1 ist ein Halteelement 6 angebracht, und das freie Ende dieses Halteelements 6 ist im Flachdisplaygehäuselager 4 des ersten Standfußteils 2 gelagert. Das erste Standfußteil 2 ist in dieser Variante eine ebene Platte, die in der ersten Endposition der beiden Standfußteile 2, 3 mit dem zweiten Standfußteil 3 eine ebene Standfläche bilden. Nach Verschwenken in die zweite Endposition, wie in FIG 4 gezeigt, deckt auch in dieser Version das zweite Standfußteil 3 das im Flachdisplaygehäuse 1 untergebrachte LCD-Display ab.

Ein Lager mit stufenloser Verstellbarkeit und mit integrierter Reibungsbremse ist in FIG 5 gezeigt. Beispielsweise ist das Flachdisplaygehäuse 1 mit einer Hülse 7 fest verbunden. Die Achse 8 ist an einem Ende schraubenkopfförmig durch eine Scheibe 9 abgeschlossen. Ein ringförmiger Reibbelag 10, die Hülse 7, eine Spiralfelder 11 und zwei Scheiben 12, 13 sind auf die Achse 8 geschoben. Diese auf die Achse 8 geschobenen Lagerteile werden gegen die Scheibe 9 gepreßt. Dieser Preßzustand wird durch eine Sicherungseinrichtung 14 fixiert. Die Sicherungseinrichtung 14 ist durch einen röhrenförmig ausgebildeten, längs geschlitzten, aus Federstahl gefertigten Stift realisiert, der in eine Bohrung quer zur Längsrichtung der Achse 8 gesteckt ist.

Die Innendurchmesser des ringförmigen Reibbelags 10 und der Hülse 7 entsprechen zumindest in einem Teilbereich dem Außendurchmesser der Achse 8, auf die sie aufgeschoben sind. Der Innendurchmesser der Hülse 7 ist in einem zweiten Teilbereich so aufgeweitet, daß die Spiralfeder 11 in diesen zweiten Teilbereich eindringen kann. Durch diese Maßnahme ist eine sichere Führung der Spiralfeder 11 auf der Achse 8 gewährleistet und gleichzeitig wird ein Abgleiten der Spiralfeder 11 von der Stirnfläche der Hülse 7 verhindert. Darüber hinaus kann durch das Eindringen der Spiralfeder 11 in die Hülse 7 die Gesamtlänge des Lagers verringert werden. Die Spiralfeder 11 hat ebenso wie die Hülse 7 einen bestimmten Platzbedarf. Durch das Eindringen der Spiralfeder 11 in die Hülse 7 verringert sich der gemeinsame Platzbedarf der beiden Lagerteile.

Das Flachdisplaygehäuse 1 bzw. das erste Standfußteil 2 ist am äußeren Umfang der Hülse 7 bzw. der Achse 8 befestigt. Am äußeren Umfang sowohl der Hülse 7 als auch der Achse 8 sind Maßnahmen getroffen, die der besseren Verbindbarkeit mit den zu lagernden Teilen dienen. So weisen beispielsweise sowohl die Hülse 7 als auch die Achse 8 zwei unterschiedliche Außendurchmesser auf. Auf diese Weise haben diese beiden Lagerteile einen Anschlag, bis zu dem jeweils das Flachdisplaygehäuse 1 bzw. das erste Standfußteil 2 aufgeschoben werden kann. Die Oberflächen der jeweils kleineren Außendurchmesser der beiden Lagerteile können aufgerauht oder gerändelt sein. In der Achse 8 erkennt man zusätzlich eine dreiecksförmige Nut 15, durch die ein Abziehen des ersten Standfußteiles 2 von der Achse 8 - beispielsweise mit Hilfe eines Sprengringes - unterbunden werden kann.

Beim Schwenken des Flachdisplaygehäuses 1 wird die Hülse 7 auf der Achse 8 gedreht. Die Scheibe 9, der Reibbelag 10 und eine Stirnseite der Hülse 7 reiben aneinander. Dadurch verbleibt das Flachdisplaygehäuse 1 in jeder Schwenkposition, in die es gebracht wird.

## Patentansprüche

1. Kommunikationsendgerät mit Flachdisplay, bestehend aus einem flach ausgeformten Flachdisplaygehäuse (1), das auf einem ebenso flach ausgeformten Standfuß (2,3) auf einer parallel zur Frontseite verlaufenden Achse schwenkbar gelagert ist, wobei der Standfuß (2,3) aus zwei gegenseitig durch ein Standfußlager (5) verbundenen, in zwei Endpositionen verschwenkbaren Standfußteilen (2,3) besteht und wobei ein erstes Standfußteil (2) über ein Flachdisplaygehäuselager (4) zur schwenkbaren Lagerung des Flachdisplaygehäuses (1) mit diesem Flachdisplaygehäuse (1) verbunden ist, **dadurch gekennzeichnet**, daß die beiden Standfußteile (2,3) um 270° von einer ersten Endposition in eine zweite Endposition verschwenkbar sind, daß die beiden Standfußteile (2,3) in der ersten Endposition eine Standfläche des Standfußes (2,3) bilden und daß das zweite Standfußteil (3) in der zweiten Endposition zumindest den Bereich des Flachdisplaygehäuses (1) abdeckt, in dem das Display untergebracht ist.

2. Kommunikationsendgerät nach Anspruch 1, **dadurch** **gekennzeichnet**, daß das erste Standfußteil (2) winkelig ausgeführt ist, daß in einem Schenkel des ersten Standfußteils (2) das Flachdisplaygehäuselager (4) untergebracht ist, daß der zweite Schenkel des ersten Standfußteils (2) das Standfußlager (5) enthält und daß nur dieser zweite Schenkel des ersten Standfußteils (2) gemeinsam mit dem zweiten Standfußteil (3) in der ersten Endposition die Standfläche des Standfußes (2,3) bilden.

3. Kommunikationsendgerät nach Anspruch 1, **dadurch** **gekennzeichnet**, daß an der zum Standfuß (2,3) gewandten Außenseite des Flachdisplaygehäuses (1) mindestens ein Halteelement (6) angebracht ist, und daß das freie Ende des Halteelements (6) im Flachdisplaygehäuselager (4) des ersten Standfußteils (2) gelagert ist.

4. Kommunikationsendgerät nach mindestens einem der vorhergehenden Ansprüche, bei dem das Standfußlager und/oder das Flachdisplaygehäuselager durch ein Lager zur stufenlosen Positionierung zweier gegeneinander dreh- oder schwenkbarer Teile, die jeweils mit einem Lagerteil fest verbunden sind, gebildet sind, **dadurch gekennzeichnet,** daß auf eine Achse (8), die an ihren einen Ende durch eine schraubenkopfähnliche Scheibe (9) abgeschlossen ist, ein ringförmiger Reibbelag (10) und eine Hülse (7) aufgeschoben sind, daß die Hülse (7) in einem ersten Teilbereich einen dem Durchmesser der Achse (8) entsprechenden Innendurchmesser aufweist, daß die Hülse (7) in einem zweiten Teilbereich einen so großen Innendurchmesser aufweist, daß eine auf die Achse (8) aufgeschobene Spiralfeder (11) in den zweiten Teilbereich der Hülse (7) teilweise eindringt, daß die Spiralfeder (11) einerseits durch die Hülse (7) und andererseits durch zwei auf die Achse (8) geschobene Scheiben (12,13) unter Druck eingespannt ist und daß die beiden gegeneinander verdrehbaren Scheiben durch eine mit der Achse (8) verbindbare Sicherungseinrichtung (14) fixiert sind.

5. Kommunikationsendgerät nach Anspruch 4, **dadurch** **gekennzeichnet**, daß die Sicherungseinrichtung (14) als quer zur Achse (8) durch die Achse (8) gestecktes stiftartiges Element ausgebildet ist.

6. Kommunikationsendgerät nach Anspruch 4, **dadurch** **gekennzeichnet**, daß die Sicherungseinrichtung (14) aus einer rings um die Achse (8) eingebrachten Nut und einem in diese Nut eingesteckten Sprengring besteht.

7. Kommunikationsendgerät nach einem der vorhergehenden Ansprüche 4 bis 6, **dadurch gekennzeichnet,** daß die Achse (8) in einem ersten Bereich, auf den der Reibbelag (10), die Hülse (7), die Spiralfeder (11) und die beiden Scheiben (12,13) aufgeschoben und durch die Sicherungseinrichtung (14) fixiert sind, einen ersten Außendurchmesser aufweist und daß die Achse (8) in einem zweiten Bereich einen zweiten Außendurchmesser aufweist, der kleiner ist als der erste Außendurchmesser.

8. Kommunikationsendgerät nach einem der Ansprüche 4 bis 7, **dadurch gekennzeichnet,** daß die Hülse (7) in einem ersten, mit dem ringförmigen Reibbelag (10) in Kontakt stehenden Bereich einen ersten Außendurchmesser aufweist und daß die Hülse (7) in einem zweiten Bereich einen zweiten Außendurchmesser aufweist, der kleiner ist, als der erste Außendurchmesser.

## Claims

1. Communication terminal with a flat-panel display consisting of a flatly shaped flat-panel display housing (1) which is supported pivotably on an axis extending in parallel with the front on an also flatly shaped pedestal (2, 3), the pedestal (2, 3) consisting of two pedestal parts (2, 3) which can be pivoted in two end positions and are mutually connected by a pedestal bearing (5) and a first pedestal part (2) being connected to this flat-panel display housing (1) for the pivotable support of the flat-panel display housing (1) via a flat-panel display housing bearing (4), characterized in that the two pedestal parts (2, 3) can be pivoted by 270°C from a first end position to a second end position, in that the two pedestal parts (2, 3) form a support area of the pedestal (2, 3) in the first end position and in that the second pedestal part (3) covers at least the area of the flat-panel display housing (1) in which the display is accommodated, in the second end position.

2. Communication terminal according to Claim 1, characterized in that the first pedestal part (2) is constructed to be angled, in that the flat-panel display housing bearing (4) is accommodated in one leg of the first pedestal part (2), in that the second leg of the first pedestal part (2) contains the pedestal bearing (5) and in that only this second leg of the first pedestal part (2), together with the second pedestal part (3), form the support area of the pedestal (2, 3) in the first end position.

3. Communication terminal according to Claim 1, characterized in that at least one holding element (6) is mounted on the outside, facing the pedestal (2, 3), of the flat-panel display housing (1), and in that the free end of the holding element (6) is supported in the flat-panel display housing bearing (4) of the first pedestal part (2).

4. Communication terminal in accordance with at least one of the preceding claims, in which the pedestal bearing and/or the flat-panel display housing bearing are formed by a bearing for the continuous positioning of two mutually rotatable or pivotable parts which are in each case permanently connected to one bearing part, characterized in that an annular friction cover (10) and a sleeve (7) are pushed onto a shaft (8) which is terminated at one end by a screw-head-like disc (9), in that the sleeve (7) exhibits an inside diameter corresponding to the diameter of the shaft (8) in a first part area, in that the sleeve (7) exhibits in a second part area an inside diameter of such a size that a spiral spring (11) pushed onto the shaft (8) partially penetrates into the second part area of the sleeve (7), in that the spiral spring (11) is clamped under pressure, on the one hand, by the sleeve (7) and, on the other hand, by two discs (12, 13) pushed onto the shaft (8), and in that the two mutually rotatable discs are fixed in location by a securing device (14) which can be connected to the shaft (8).

5. Communication terminal according to Claim 4, characterized in that the securing device (14) is constructed as a pin-like element pushed through the shaft (8) transversely to the shaft (8).

6. Communication terminal according to Claim 4, characterized in that the securing device (14) consists of a groove produced around the shaft (8) and a snap ring inserted into this groove.

7. Communication terminal according to one of the preceding Claims 4 to 6, characterized in that the shaft (8) exhibits a first outside diameter in a first area onto which the friction cover (10), the sleeve (7), the spiral spring (11) and the two discs (12, 13) are pushed and fixed in location by the securing device (14), and in that the shaft (8) exhibits a second outside diameter which is smaller than the first outside diameter in a second area.

8. Communication terminal according to one of Claims 4 to 7, characterized in that the sleeve (7) exhibits a first outside diameter in a first area which is in contact with the annular friction cover (10), and in that the sleeve (7) exhibits a second outside diameter which is smaller than the first outside diameter in a second area.

## Revendications

1. Terminal de communication comportant un dispositif d'affichage plat, constitué par un boîtier de forme plate (1) pour le dispositif d'affichage, qui est monté de manière à pouvoir pivoter sur un pied de support, également de forme plane (2, 3), autour d'un axe parallèle à la face avant, et dans lequel le pied de support (2, 3) est constitué de deux éléments (2, 3), qui sont reliés l'un à l'autre par un palier (5) et peuvent pivoter dans deux positions d'extrémité, et dans lequel un premier élément (2) du pied de support est relié, par l'intermédiaire d'un palier (4) du boîtier du dispositif d'affichage plat, à ce boîtier (1) de manière que ce boîtier (1) du dispositif d'affichage plat est supporté de manière à pouvoir pivoter, caractérisé par le fait que les deux éléments (2, 3) du pied de support peuvent être amenés au moyen d'un pivotement sur 270° depuis une première position d'extrémité dans une seconde position d'extrémité, que les deux éléments (2, 3) du pied de support forment, dans la première position, une surface d'appui du pied (2,3), et que, dans la seconde position d'extrémité, le second élément (3) du pied de support recouvre au moins la partie du boîtier (1) du dispositif d'affichage plat, dans laquelle est logé le dispositif d'affichage.

2. Terminal de communication suivant la revendication 1, caractérisé par le fait que le premier élément (2) du pied de support est réalisé en forme de cornière, que dans une aile du premier élément (2) du pied de support est logé un palier (4) du boîtier du dispositif d'affichage plat, que la seconde aile du premier élément (2) du pied de support contient le palier (5) du pied de support et que seule cette seconde aile du premier élément (2) du pied de support forme, conjointement avec le second élément (3) du pied de support, dans la première position d'extrémité, la surface d'appui du pied de support (2, 3).

3. Terminal de communication suivant la revendication 1, caractérisé par le fait que sur la face extérieure, tournée vers le pied de support (2, 3), du boîtier (1) du dispositif d'affichage plat est disposé au moins un élément de retenue (6), et que l'extrémité libre de l'élément de retenue (6) est montée dans le palier (4), prévu pour le boîtier du dispositif d'affichage plat, du premier élément (2) du pied de support.

4. Terminal de communication suivant au moins l'une des revendications précédentes, dans lequel le palier du pied de support et/ou le palier du boîtier du dispositif d'affichage plat sont formés par un palier servant au positionnement progressif de deux éléments pouvant tourner ou pivoter l'un par rapport à l'autre et qui sont reliés fermement chacun à un élément du palier, caractérisé par le fait que sur un axe (8), qui se termine, à l'une de ses extrémités, par un disque en forme de tête de vis (9), sont emmanchés un revêtement annulaire à friction (10) et une douille (7), que la douille (7) possède, dans une première partie, un diamètre intérieur qui correspond au diamètre de l'axe (8), que la douille (7) possède, dans une seconde partie, un diamètre intérieur suffisamment important pour qu'un ressort hélicoïdal (11), emmanché sur l'axe (8), pénètre partiellement dans la seconde zone de la douille (7), que le ressort hélicoïdal (11) est serré sous pression, d'une part, par la douille (7), et, d'autre part, par deux disques (12, 13) emmanchés sur l'axe (8), et que les deux disques, qui peuvent tourner l'un par rapport à l'autre, sont fixés par un dispositif de sécurité (14), qui peut être relié à l'axe (8).

5. Terminal de communication suivant la revendication 4, caractérisé par le fait que le dispositif de sécurité (14) est réalisé sous la forme d'un élément en forme de tige, qui est enfiché à travers l'axe (8), transversalement par rapport à ce dernier.

6. Terminal de communication suivant la revendication 4, caractérisé par le fait que le dispositif de sécurité (14) est constitué par une gorge ménagée tout autour de l'axe (8), et par un jonc enfiché dans cette gorge.

7. Terminal de communication suivant l'une des revendications précédentes, caractérisé par le fait que l'axe (8) possède un premier diamètre extérieur dans une première partie, sur laquelle sont emmanchés le revêtement de friction (10), la douille (7), le ressort hélicoïdal (11) et les deux disques (12, 13), qui sont fixés au moyen du dispositif de sécurité (14), et que l'axe (8) possède, dans une seconde partie, un second diamètre extérieur qui est inférieur au premier diamètre extérieur.

8. Terminal de communication suivant l'une des revendications 4 à 7, caractérisé par le fait que la douille (7) possède un premier diamètre extérieur, dans une première partie, qui est en contact avec le revêtement annulaire de friction (10), et que la douille (7) possède, dans une seconde partie, un second diamètre extérieur, qui est inférieur au premier diamètre extérieur.
